# EUROPÄISCHE PATENTSCHRIFT

(11) **EP 2 543 333 B1**
(45) Veröffentlichungstag und Bekanntmachung des Hinweises auf die Patenterteilung: **30.08.2023**
(21) Anmeldenummer: 12006929.9
(22) Anmeldetag: 27.06.2007
(51) Int. Cl.: A61C 8/00, C04B 35/486

(54) **Verfahren zur Herstellung eines Implantatkörpers sowie Implantat mit einem derartigen Implantatkörper**
Method of manufacturing an implant body and implant comprising such a body implant
Procédé de fabrication d'un corps implantaire et implant comprenant un tel corps implantaire

(30) Priorität: 25.07.2006 DE 102006034866
(43) Veröffentlichungstag der Anmeldung: 09.01.2013
(62) Teilanmeldung aus: 07764883.0
(73) Patentinhaber: Zipprich, Holger, 64342 Malchen (DE)
(72) Erfinder: Zipprich, Holger, 64342 Malchen (DE)
(74) Vertreter: Walkenhorst, Andreas

(56) Entgegenhaltungen:
- EP-A1- 1 491 160

## Beschreibung

Die Erfindung betrifft ein Knochenimplantat. Sie bezieht sich weiter auf ein Verfahren zur Herstellung eines zur Einbringung in den menschlichen Körper vorgesehenen Knochenimplantats.

Implantate zur Einbringung in den menschlichen Körper sind in vielfältigen Formen bekannt. Dentalimplantate werden meist durch Einschrauben an Stelle eines extrahierten oder ausgefallenen Zahnes in den Kieferknochen eingesetzt, um dort nach einer Einheilphase von drei bis vier Monaten ein als Zahnersatz dienendes prothetisches Aufbauteil oder eine Krone zu halten. Dazu ist ein derartiges Zahnimplantat üblicherweise als geeignet geformter Metall- oder Keramikkörper ausgebildet und in der Art eines Stiftes geformt und weist am apikalen Ende ein zumeist selbstschneidendes Schraubengewinde auf, mit welchem der Stift in das entsprechend präparierte Implantatbett eingesetzt wird.

In der Regel werden Dentalimplantate oder sonstige Implantate aus Titan, Zirkon, Niob oder Tantal oder aus gewebeverträglichen Legierungen, die eines dieser Elemente als Hauptbestandteil enthalten, hergestellt. Darüber hinaus werden Dentalimplantate oder sonstige Knochenimplantate auch aus Keramiken hergestellt. Die verwendeten Keramiken sind meistens Keramiken auf Zirkonoxidbasis, bei welchen vorzugsweise mittels der Beimischung von Yttriumoxid die tetragonale Phase stabilisiert ist (TZP, TZP-A mit Aluminiumoxidanteilen), oder die durch die, meist zusätzliche, Beimischung von Aluminiumoxid, Aluminiumoxid verstärkt sind (ATZ-Keramiken). Es sind aber auch Dentalimplantate auf Aluminiumoxidbasis bekannt.

Bei allen diesen Implantaten besteht das Ziel, dass die Knochensubstanz die Möglichkeit erhält, sich rasch und dauerhaft mit der Implantatoberfläche zu verbinden. Man spricht dabei auch von der so genannten Osseointegration. In diesem Zusammenhang ist bereits seit einiger Zeit bekannt, dass der mikroskopischen Struktur der Implantatoberflächen zur Begünstigung dieser Osseointegration eine besondere Bedeutung zukommt. Insbesondere haben sich bislang poröse Oberflächen mit einer Porengröße im Mikrometerbereich als vorteilhaft erwiesen. Durch die vergrößerte Kontaktfläche zwischen Implantat und Knochen wird das Knochenwachstum gefördert und damit die Knochenanlagerungsrate nach dem postoperativen Trauma gesteigert.

Beispielsweise sind in der EP 1 450 722 B1 Dentalimplantate der oben genannten Art auf Keramikbasis beschrieben, bei denen zur Förderung der Osseointegration eine Aufrauhung im Pfostenteil mit einer Rautiefe von 4 µm bis 20 µm vorgesehen ist. Dabei werden zunächst durch Strahlenbehandlung Oberflächenstrukturen erzeugt.

Aus der DE 20 2005 002 450 U1 sind weiterhin metallische Dentalimplantate mit einer homogenen nanostrukturierten Oberfläche bekannt. Derartige nanostrukturierte Oberflächen scheinen aufgrund eines besonders günstigen Benetzungsverhaltens das Einwachsen der Implantate und die Integration in die Knochensubstanz zu fördern.

Ein gattungsgemäßes Knochenimplantat ist auch aus der EP 1 491 160 bekannt.

Bislang gebräuchliche Methoden zur Oberflächenstrukturierung von Keramikkörpern, insbesondere zur Verwendung als Dentalimplantate, umfassen insbesondere das Sandstrahlen, das Ätzen und die Laserbehandlung. Die derzeit am Markt erhältlichen keramischen Dentalimplantate werden üblicherweise lediglich sandgestrahlt und weisen meist eine Rautiefe von 0,5 µm bis ca. 4 µm auf.

Obwohl durch die genannten Ansätze bereits Verbesserungen beim Einwachsverhalten oder der Osseointegration der Implantate erzielt werden konnten, besteht weiterhin der Wunsch nach noch weitergehenden Verbesserungen in dieser Hinsicht.

Der Erfindung liegt daher die Aufgabe zugrunde, ein Verfahren zur Herstellung eines zur Einbringung in den menschlichen Körper vorgesehenen Implantatkörpers, der oben genannten Art anzugeben, der im Vergleich zu den genannten bekannten Konzepten ein noch weiter verbessertes Einwachs- oder Integrationsverhalten bei der Einheilung in den Knochen aufweist. Des Weiteren soll ein Knochenimplantat mit einem derartigen Implantatkörper angegeben werden.

Bezüglich des Knochenimplantats wird diese Aufgabe gelöst mit den Merkmalen des Anspruchs 1. Bezüglich des Verfahrens wird die genannte Aufgabe erfindungsgemäß gelöst mit den Merkmalen des Anspruchs 2.

Dabei wird ein auf Basis von Yttrium- und/oder Aluminiumoxid-stabilisiertem Zirkonoxid ausgeführter Keramik-Grundkörper derart einem Ätz-Prozess ausgesetzt, dass an seiner Oberfläche zumindest in einem Teilbereich einzelne, stabilisierende Keramik-Bestandteile wie Oxide selektiv derart herausgelöst werden, dass an seiner Oberfläche zumindest in einem Teilbereich eine Verarmungszone mit im Vergleich zum Innenvolumen reduziertem Anteil am jeweiligen Keramik-Bestandteil, an Yttrium- bzw. Aluminiumoxid entsteht. Dadurch entsteht ein Keramikkörper, dessen Oberfläche zumindest in einem Teilbereich mit einer nanoskopische Poren aufweisenden oder anderweitig nanoskopisch ausgeführten Struktur versehen ist, und die eine Verarmungszone mit im Vergleich zum Innenvolumen des Keramikkörpers reduziertem Yttrium- bzw. Aluminiumoxid-Anteil aufweist.

Die Erfindung geht dabei von der Überlegung aus, dass eine besonders weitgehende Förderung der Osseointegration erreichbar ist, indem insbesondere die Oberflächenstruktur im relevanten Bereich des Implantatkörpers konsequent zur Unterstützung der Osseointegration ausgelegt ist. Dazu sollte gezielt eine diesem Ziel förderliche Oberflächenstruktur im nanoskopischen Maßstab, also insbesondere mit nanoskopischen Poren, bereitgestellt werden. Wie sich überraschend gerade bei der Verwendung von Yttrium-stabilisiertem Zirkonoxid für den Keramickörper herausgestellt hat, kann die oberflächennahe Ausbildung derartiger nanoskopischer Strukturen oder Poren sehr begünstigt werden, indem gezielt zumindest in geringen Anteilen der Oberflächenbereiche eine Umformung der an sich im Innenvolumen des Keramikkörpers vorliegenden tetragonalen Kristallstruktur des Yttrium-stabilisierten Zirkonoxids in die monokline Kristallstruktur vorgenommen wird. Um dies auf besonders einfache Weise zu erreichen, ist oberflächennah die gezielte Entfernung des Yttrium-Anteils aus dem Material vorgesehen, die die Umwandlung und Ausbildung der monoklinen Phase bewirkt.

Die somit erfindungsgemäß vorgesehene Herstellung der Verarmungszone im Oberflächenbereich, die letztendlich die gewünschte Struktur und die gewünschten Eigenschaften bei der Verbindung mit dem Körpergewebe bewirkt, kann insbesondere durch selektives Herauslösen einzelner Bestandteile wie Oxide aus der Oberfläche, durch einen geeignet gewählten Ätzprozess, erreicht werden. Solch günstige Strukturen können insbesondere geschaffen werden, indem einzelne Elemente und/oder einzelne in der Keramik befindliche Metalloxide (Zirkonoxid, Aluminiumoxid, Yttriumoxid, Hafniumoxid etc.), insbesondere Yttriumoxid und Hafniumoxid, aus der Oberfläche gelöst werden. Somit entsteht auf und/oder im grenznahen Bereich der Oberfläche eine Verarmungszone dieser Metalloxide.

Durch die Behandlung des Keramik-Grundkörpers in der Art des Ätzens und insbesondere des interkristallinen Ätzens bildet sich nämlich eine spezifische Nanostruktur auf der Oberfläche aus. Dabei sind eine Vielzahl vergleichsweise kleinerer Poren oder Vertiefungen mit einer mittleren Ausdehnung im Sub-Mikrometerbereich, vorzugsweise kleiner als 500 nm und insbesondere kleiner 250 nm anzutreffen. Derartige Strukturen können beispielsweise anhand elektronenmikroskopischer Aufnahmen nachgewiesen werden. Die Oberfläche zeichnet sich insbesondere dadurch aus, dass die Tiefe der Nanostruktur, also die Tiefe der dabei erzielbaren Poren, größer ist als die Strukturweite, also die charakteristische laterale Ausdehnung der erzielten Strukturen.

Das Verhältnis bei der Nanostruktur zwischen der Strukturtiefe und der Strukturweite ist zweckmäßigerweise größer als 1:1, vorteilhafterweise größer als 1,5:1 und insbesondere größer als 2:1.

Durch das Erzeugen der Verarmungszone wird die Entstehung einer nanoskopischen Struktur mit den beschrieben Eigenschaften begünstigt und/oder ermöglicht. Weiterhin stehen die Oxide der verwendeten Keramiken, insbesondere Hafniumisotope, im Verdacht, radioaktive Eigenschaften zu besitzen. Werden diese aus der Oberfläche gelöst und sind nicht im direkten Kontakt mit den Knochenund/oder Gewebszellen, kann dies das Knochenwachstum und den Knochenerhalt positiv beeinflussen.

Eigene Untersuchungen bezüglich der Benetzungseigenschaften haben ergeben, dass es insbesondere zwei Faktoren für die Benetzungseigenschaften von Oberflächen gibt. Der erste Faktor für die Benetzungseigenschaften ist der Kontaminationsgrad an Kohlenwasserstoffen auf der Oberfläche. Benetzungsversuche mit Wasser bei Titanproben haben gezeigt, dass direkt nach der Ätzung ein Hydrophilverhalten mit Benetzungswinkeln kleiner 15° vorhanden ist. Nach mehrstündiger Lagerung der Proben an der Luft lässt dieses Verhalten nach und kann in einem hydrophoben Verhalten enden.

Der zweite Faktor lässt sich wie folgt beschreiben. Abhängig von den Strukturen kleiner 100 µm, besonders kleiner 10 µm und insbesondere kleiner 0,5 µm zeigt sich, dass das Benetzungsverhalten hin zum Hydrophilen oder zum Hydrophoben beeinflussbar ist. Es zeigte sich, dass bei Strukturen mit dieser Strukturgröße und mit spitzen und scharfkantigen Erhebungen die Benetzungseigenschaften sich zum hydrophoben Verhalten hin verändern. Erhebungen mit einer solchen Strukturgröße und abgerundeten bzw. harmonischen Erhebungen verändern das Benetzungsverhalten hin zum Hydrophilen. Als besonders günstig haben sich Strukturen mit den beschriebenen Dimensionen erwiesen, bei denen die Erhebungen durchschnittlich Radien aufweisen, die größer sind als 5 nm, vorteilhafterweise größer als 10 nm und insbesondere größer als 50 nm sind, aber kleiner als 500 nm. Weitere Untersuchungen haben gezeigt, dass dieses Verhalten auch bei keramischen Oberflächen Gültigkeit besitzt.

Insbesondere bei Keramiken auf Zirkonoxidbasis konnten besonders günstige Benetzungseigenschaften festgestellt werden, wenn die Strukturen kleiner 1 µm, vorteilhafterweise kleiner 0,5 µm und insbesondere kleiner 0,2 µm sind und die Erhebungen durchschnittlich Radien aufweisen, die größer sind als 5 nm, vorteilhafterweise größer als 10nm und insbesondere größer als 50 nm sind, aber kleiner als 500 nm. Abhängig von der Struktur im Bereich der Strukturgröße zwischen 50 nm und 50 µm kommt es vor der Kontamination mit Kohlenwasserstoffen und/oder durch die Überlagerung der beschriebenen Nanostruktur zu einem Kapillareffekt. Dieser zeichnet sich dadurch aus, dass Wasser entgegen der Schwerkraft an der Oberfläche, insbesondere an einem Dentalimplantat, nach oben steigt. Diese Eigenschaft stellt sich als besonders günstig heraus, da auf diesem Wege Proteine, insbesondere die BPM Proteine in und/oder auf der Oberfläche gespeichert und/oder gehäuft angelagert werden können. Dies passiert entweder dadurch, dass die Oberfläche mit Blut benetzt wird, oder indem die Implantate mit einer mit Proteinen angereicherten Flüssigkeit vorbehandelt werden.

Bei einer keramischen Oberfläche mit hydrophilen Eigenschaften (Benetzungswinkel kleiner 15°) und bei einer Nanostruktur, bei der das Verhältnis zwischen der Strukturtiefe und der Strukturweite größer ist als 1:1, vorteilhafterweise größer als 1,5:1 und insbesondere größer als 2:1, besteht die Möglichkeit, dass sich die Proteine in den Strukturen verhaken und dem Knochenwachstum fördernd zur Verfügung stehen.

Die durch die Verarmungszone erhältliche mikroskopische Oberflächenvergrößerung zeichnet sich dadurch aus, dass meist runde Krater gebildet werden, welche einer Mondlandschaft ähneln. Dieser Krater zeichnen sich dadurch aus, dass das Verhältnis zwischen Strukturtiefe und Strukturweite kleiner ist als 1:1, vorzugsweise kleiner als 1:2 und insbesondere kleiner als 1:5. Die Krater weisen einen Durchmesser von größer 0,5 µm, insbesondere größer 1 µm und kleiner 60 µm und insbesondere kleiner 40 µm auf. Die Tiefe der Krater ist dabei typischerweise kleiner als 4 µm, vorteilhafterweise kleiner als 3 µm und insbesondere kleiner als 2 µm.

Die mit der Erfindung erreichbaren guten Benetzungseigenschaften des Keramickörpers sind zusätzlich zu der besonders vorteilhaften Anwendung für Dentaloder sonstige Knochenimplantate auch für andere Anwendungen besonders gut geeignet. Beispielsweise erweisen sie sich darüber hinaus bei der Befestigung von Keramikkörpern mittels eines Klebers, Lack, Zement etc. als besonders wichtig und sind daher besonders vorteilhaft im Einsatz im Zusammenhang mit Klebeverbindungen jeglicher Art. So ließen sich keramische Prothetikelemente (Kronen, Brücken, Inlays, Onlays) mit einem besseren Verbund zum Befestigungskleber/ -zement fügen als bislang.

Benetzt ein Kleber oder ein anderes flüssiges Befestigungsmaterial bedingt durch die günstigen Benetzungseigenschaften die gesamte Oberfläche, kommt es zu einem fließenden Übergang zwischen dem keramischen Werkstück und dem Befestigungsmaterial (vorzugsweise ein Kleber). Auf diesem Wege kommt es zu optimierten Retentionseigenschaften und zu einem optimierten Werkstück-Befestigungsmaterial-Verbund. Diese Eigenschaften können bevorzugt in allen Bereichen eingesetzt werden, in welchen keramische Werkstücke auf Zirkonoxid- oder Aluminiumoxidbasis verwendet werden.

Bedingt durch die günstigen Benetzungseigenschaften der Oberfläche werden auch die Strömungseigenschaften keramischer Werkstoffe mit einer solchen Oberfläche in Flüssigkeiten und Gasen beeinflusst.

Weiterhin hat sich bei der Analyse im Hinblick auf die Phaseneigenschaften gezeigt, dass durch eine der oben beschriebenen Behandlungen auf der Oberfläche sich das Verhältnis zwischen der tetragonalen und der monoklinen Phase geändert hat. Nach dem Sintervorgang und vor der Insertion in den Patientenmund konnte bei einem Dentalimplantat durch ein solches Verfahren der Anteil der monoklinen Phase in der Oberfläche auf oder um wenigstens 0,1 %, vorteilhafterweise auf oder um mehr als 0,5 % und insbesondere auf oder um mehr als 1,5 % gesteigert bzw. reduziert werden. Da die Oberfläche durch die geringere Dichte der monoklinen Phase unter Druck gesetzt wird, ist auf diesem Wege die initiale Rissbildung gehemmt und ist mit einer Steigerung der initialen Festigkeit zu rechnen.

Die Herstellung der vorgesehenen Verarmungszone in der Oberfläche des Keramikkörpers kann insbesondere durch einen Ätzprozess in einem geeignet gewählten Säurebad erfolgen. Die vorgesehenen Reaktionspartner für die Keramik des Grundkörpers, also die Ionen mit Bestandteilen aus der VII. Hauptgruppe des Periodensystems der Elemente, können dabei insbesondere als Salzbildner für das jeweilige Metall wirken. Insbesondere kann das Säurebad Ionen umfassen, die aus den Elementen Fluor (F) oder Chlor (Cl) bestehen oder diese als Bestandteile umfassen. Bei der Behandlung im Säurebad besteht die Möglichkeit, dass die Ionen der Säure die Oberfläche chemisch verändern und als Verunreinigung auf der Oberfläche verbleiben.

Einige der genannten Ionen werden auch für das Zellwachstum benötigt. Folglich können diese Verunreinigungen gewollt erzeugt werden und im Bereich von größer als 0,1 %, vorzugsweise größer als 1 % und insbesondere größer als 3 %, auf der Oberfläche nachweisbar sein und das Knochenwachstum positiv beeinflussen.

Gerade die bei diesem Prozess entstehenden Nanostrukturen scheinen im Allgemeinen das Benetzungsverhalten des Keramikkörpers oder bei Verwendung als Dentalimplantat auch die Proteinanlagerung sowie die Collagen- und Zellbindung zu fördern. Dabei spielen insbesondere auch chemische Eigenschaften der Oberfläche im Mikrometerbereich und im Nanometerbereich eine wesentliche Rolle (z. B. hydrophil oder hydrophob, dotiert oder rein, etc.). Im vorliegenden Fall scheint ein für die Implantologie besonders wichtiger Vorteil der nach dem erfindungsgemäßen Verfahren hergestellten bzw. präparierten Keramik- oder Implantatoberflächen insbesondere darin zu bestehen, dass diese einen ausgesprochen hydrophilen Charakter aufweisen, der beispielsweise auch nach längerem Kontakt des Implantatkörpers mit der Erdatmosphäre nicht verloren geht.

Als Maß für den hydrophilen Charakter dient insbesondere der Kontaktwinkel, den ein die Oberfläche benetzender Flüssigkeitstropfen mit der Oberfläche bildet. Wie sich gezeigt hat, führen die nach dem neuen Verfahren behandelten Keramikoberflächen insbesondere bei Wasser zu einer ausgesprochen guten Benetzbarkeit mit Kontaktwinkeln von weniger als 10°. Das heißt, auf der Oberfläche befindliche Flüssigkeitstropfen besitzen die Gestalt einer sehr flachen Kugelkappe. Der hierdurch zum Ausdruck kommende hydrophile Charakter der hergestellten Metallkörper bleibt zudem dauerhaft auch über einen Zeitraum von mehr als einigen Tagen erhalten.

Das Implantat und insbesondere dessen Keramikkörper wird vorteilhafterweise mit einem spezifisch gewählten Verfahren hergestellt. Dazu wird vorzugsweise als Keramik-Grundkörper ein mit einer mikrostrukturierten, vorzugsweise sandgestrahlten, gelaserten und/oder geätzten Oberfläche versehener Implantat-Grundkörper verwendet. Die Implantatoberfläche des solchermaßen hergestellten Implantats weist einerseits eine Vielzahl von zwar unregelmäßig angeordneten, aber statistisch gesehen annähernd homogen verteilten Poren mit einer Rautiefe von ca. 0,5 µm bis 20 µm auf, wobei andererseits Krater mit einem Durchmesser von 0,5 µm bis ca. 60 µm erzeugt werden, die eine Rautiefe von kleiner 4 µm und insbesondere kleiner 2 µm aufweisen und zusätzlich die beschriebene nanoskopische Struktur aufweisen. Derartig ausgestaltete Implantatkörper unterstützen und beschleunigen durch Anregung der Aktivität der knochenbildenden Zellen, der Osteoblasten, den nach der Implantation stattfindenden Heilungsprozess nachdrücklich. Dabei ist das Herstellungsverfahren für das Implantat auch im industriellen Maßstab vergleichsweise einfach und kostengünstig durchzuführen und zu kontrollieren. Die Prozessparameter werden dabei vorzugsweise derart gewählt, dass sich auf der Oberfläche des Implantat-Grundkörpers eine der Mikrostruktur überlagerte Nanostruktur der oben beschriebenen Art ausbildet.

Der Keramikkörper ist dabei vereugsweise als Knochenimplantat, besonders vorteilhaft als Dentalimplantat, ausgestaltet, vorzugsweise aus einer Zirkonoxidbasiskeramik, aus einer zirkonoxidhaltigen Keramik oder aus einer Aluminiumoxidhaltigen Keramik, vorteilhafterweise mit einer mikrostrukturierten Oberfläche, wobei der Mikrostruktur eine Nanostruktur überlagert ist, und wobei im Bereich der Oberfläche vorzugsweise Stickstoffatome und/oder Stickstoffverbindungen angelagert sind.

Die mit der Erfindung erzielten Vorteile bestehen insbesondere darin, dass mittels eines einfach und kostengünstig zu realisierenden chemischen Verfahrens ein Keramikkörper, insbesondere zur Verwendung als Dentalimplantat, mit einer Nanostruktur und einer Nanorauhigkeit fertigbar ist, welche sich vorteilhaft auf den Heilungsprozess nach der Verankerung des Implantats im Knochen und insbesondere auch auf die erreichbare Festigkeit der Knochen-Implantat-Verbindung auswirkt. Durch die Dotierung von Fremdatomen, insbesondere Stickstoffatomen, in die Implantatoberfläche lässt sich der Effekt noch verstärken. Darüber hinaus lassen sich aufgrund der Nano-Oberflächenstruktur des Keramikkörpers im Hinblick auf die damit verbundenen hydrophilen Eigenschaften und/oder Kapillarwirkungen Flüssigkeiten besonders einfach und wirksam in die Oberfläche einbringen. Dies könnte beispielsweise dazu verwendet werden, Medikamente oder sonstige Wirkstoffe oder Reagenzien an der Oberfläche zu platzieren. Aufgrund der guten Benetzbarkeit sind aber auch andere vorteilhafte Anwendungen denkbar, wobei beispielsweise die Aufbringung von Lacken, Klebern oder sonstigen Oberflächenbeschichtungen auf den Keramikkörper deutlich erleichtert ist.

Das durch die erhaltene Nanostruktur oder Nanorauigkeit erhaltene besonders günstige Hydrophilverhalten der behandelten Oberfläche lässt sich beispielhaft durch den dabei erhaltenen charakteristischen Benetzungswinkel erkennen, der insbesondere kleiner als 15° ist. Das damit erhaltene Hydrophilverhalten hält zudem durch die Nanoporen, Nanostrukturen, die Dotierung oder Anlagerung von Stickstoffatomen/-verbindungen auf und/oder an der Oberfläche vergleichsweise länger an als bei einer Keramikoberfläche, die chemisch aktiviert wurde.

Ausführungsbeispiele der Erfindung werden anhand einer Zeichnung und unter Zugrundelegung eines Dentalimplantats als Implantatkörper näher erläutert. Darin zeigen:
- FIG. 1: ein Dentalimplantat in einer teilweise geschnittenen Seitenansicht,
- FIG. 2: elektronenmikroskopische Aufnahmen der durch die chemische Behandlung erzeugten Implantatoberflächen mit der beschriebenen Nanostruktur, und
- FIG. 3: elektronenmikroskopische Aufnahmen der durch die chemische Behandlung erzeugten Implantatoberflächen mit der beschriebenen Mikrostruktur.

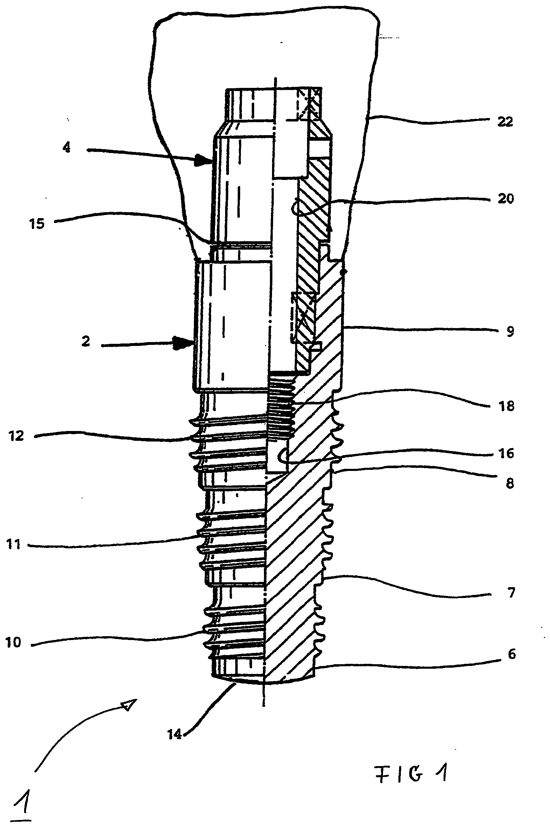

FIG. 1 zeigt teilweise in einer Ansicht und teilweise in einem axialen Schnitt ein zweiteiliges Dentalimplantat 1 mit einem Pfostenteil 2 und mit einem Aufbauteil 4. Das Pfostenteil 2 und vorzugsweise ebenso das Kopf- oder Aufbauteil 4 bestehen aus Keramik. Das Pfostenteil 2 ist dabei als Keramikkörper aus Yttrium-stabilisiertem Zirkonoxid ausgebildet und als Stufenschraube ausgestaltet. Es enthält drei Stufen 6 bis 8, welche jeweils ein selbstschneidendes Gewinde 10 bis 12 mit gleicher Steigerung aufweisen. Die dem apikalen Ende 14 nächstliegende Stufe 6 besitzt den kleinsten Durchmesser. Die dem Aufbauteil 4 nächstliegende Stufe 9 weist hingegen eine glatte zylindrische Außenfläche auf. Das Pfostenteil 2 besitzt am koronalen Ende 15 eine Innenbohrung 16, in welche das Kopf- oder Aufbauteil 4 eingesetzt ist, und welche ferner ein Innengewinde 18 enthält. Mit einer hier nicht weiter dargestellten Schraube, welche durch eine Durchgangsbohrung 20 des Aufbauteils 4 hindurch geführt und in das Innengewinde 18 eingeschraubt ist, erfolgt die Verbindung des Aufbauteils 4 mit dem Pfostenteil 2. Mit dem Aufbauteil 4 kann in bekannter Weise eine Krone 22 oder dergleichen verbunden werden.

Das Pfostenteil 2 und das Aufbauteil 4 können auch als einstückige Variante ausgeführt sein.

Das Pfostenteil 2 wird in einem entsprechend aufbereiteten Implantatbett des Kieferknochens verankert. Die Gewindekonstruktion gewährleistet dabei eine hohe Primärstabilität und eine gleichmäßige Weiterleitung der bei Kaubelastung auftretenden Kräfte in den Kieferknochen. Darüber hinaus sollte der Knochen während der sich an die Implantation anschließenden Heilungsphase möglichst direkt an das Implantat anwachsen und sich mit ihm innig verbinden. Dieser Prozess, die so genannte Osseointegration, wird durch eine gezielt angebrachte Anrauhung der Implantatoberfläche deutlich verbessert.

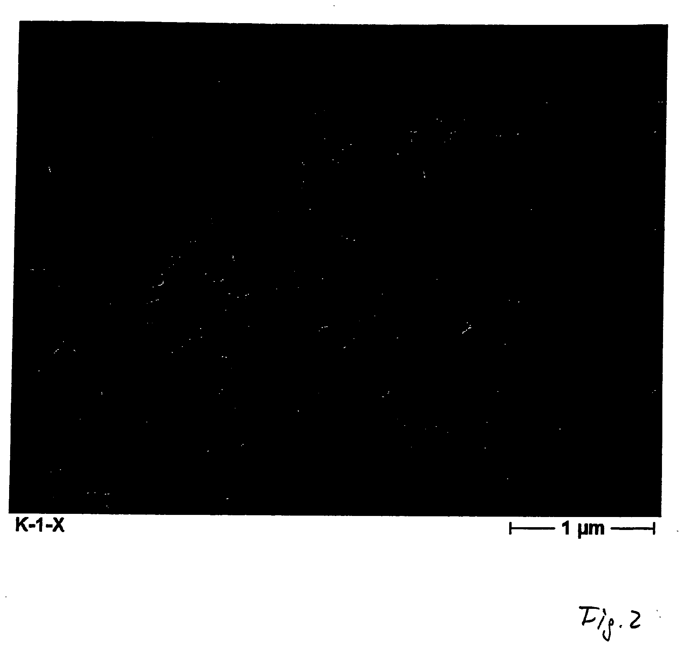

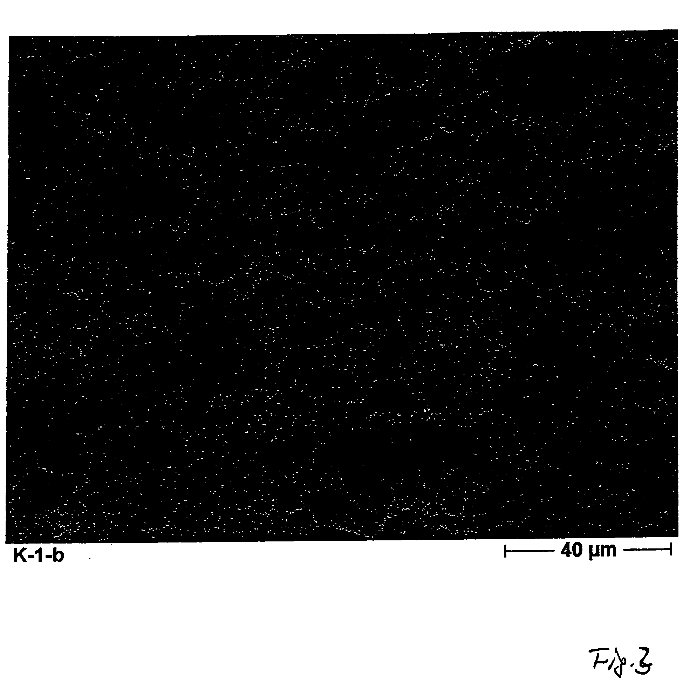

Zur Herstellung dieser Anrauhung ist eine geeignet gewählte Behandlung vorgesehen. Durch einen geeigneten Ätzprozess, beispielsweise in einem geeignet gewählten Säurebad, wird dabei die Verarmungszone in der Oberfläche des Keramikkörpers hergestellt, die sich durch einen im Vergleich zum Innenvolumen des Keramikkörpers geringeren Anteil ausgewählter Materialien, insbesondere des zur Stabilisierung des Zirkonoxids eingesetzten Yttriums, und infolgedessen auch durch einen geringeren Anteil der kristallographisch monoklinen Phase auszeichnet. Dies resultiert in den in FIG. 2 und FIG. 3 gezeigten, für die Benetzungseigenschaften sehr günstigen Oberflächenrauigkeiten auf nanoskopischer und mikroskopischer Skala.

### Objekt:

### 1. Zirkoniumoxid Basiskeramiken

a. Yttrium-stabilisierte TZP, TZP-A und ATZ Keramiken

### Besonderheiten der Oberfläche:

1. Der Gehalt an mindestens einem der Zusatzstoffe (Metalle/Metalloxide) wie z. B. Yttrium/-oxid, Aluminium/-oxid, Hafnium/-oxid in der TZP Zirkoniumkeramik ist an der Oberfläche reduziert um mehr als 5 %, vorzugsweise mehr als 25 % und insbesondere mehr als 50 %.
   a. Strukturierung durch selektive und/oder interkristalline Ätzung bzw. Korrosion durch variierende Ätzgeschwindigkeiten.
   b. Isotope des Hafniums können radioaktiv sein. Das Hafnium ist technisch nur schwer vom Yttrium zu trennen. Somit ergibt sich häufig eine Verunreinigung von Yttrium-stabilisierten Keramiken mit Hafnium, was zu einem, wenn auch sehr geringen, radioaktiven Effekt führen kann. Die Entfernung dieser Materialien kann sich günstig auf die radioaktiven Eigenschaften der Oberfläche auswirken.
2. Die Anteile der monoklinen Phase sind in der Oberfläche um mindestens 0,25 %, vorzugsweise um 1 % und insbesondere um mehr als 2 % erhöht.
   a. Bewirkt eine niedrigere Dichte im Bereich der Oberfläche und somit das Verschließen von Mikrorissen. Die Folge ist eine höhere Initialfestigkeit.
3. Die Oberfläche weist eine Kraterstruktur auf. Diese Krater sind vorwiegend rund. Die Krater haben einen Durchmesser von ca. 1 µm bis ca. 60 µm. Die Rautiefe beträgt 0,5 µm bis maximal 3,9 µm.
4. Die Oberfläche weist zusätzlich eine Strukturgröße bzw. Porosität kleiner 0,5 µm, vorzugsweise kleiner 0,2 µm und insbesondere kleiner 0,1 µm auf.
5. Die Strukturtiefe ist mindestens so groß wie die Strukturweite der Struktur nach 4.
   a. Dringt Blut, andere Sekrete oder Flüssigkeiten mit Bestandteilen von Proteinen, vorzugsweise dem BMP Protein, durch kapillare Wirkungen in die Oberfläche ein, begünstigt diese Struktur (4. und. 5.) das Anhaften durch mechanische Retentionen an der Oberfläche. Die Oberfläche kann somit als Speicher für Proteine oder andere Zusatzstoffe genutzt werden.
6. Die Oberfläche ist "fluoridiert" bzw. mit Fluoridionen angereichert und/oder mit Fluor modifiziert.
   a. Zellen benötigen zum Wachstum geringe Mengen an Fluor und/oder Fluorionen. Anlagerung geringer Mengen von Fluor und/oder Fluorionen begünstigt und/oder beschleunigen das Zellwachstum. Als Folge hiervon kann die Einheilzeit von Implantaten verkürzt werden.

### Verfahren:

1. Generelle Modifikation der Oberfläche nach 1 bis 6
2. Oberflächenbehandlung mit einer Oberflächenmodifikation nach 1 bis 6 in flüssigen und/oder gasförmigen Medien.
3. Medium nach 2. ist eines der Elemente der 3. bis 7. Hauptgruppe des Periodensystems der Elemente.
4. Medium nach 2. oder 3. ist als Hauptbestandteil Flusssäure.
5. Medium ist zwischen 30 °C und 300 °C temperiert, vorzugsweise zwischen 50 °C und 130 °C.
6. Anwendungsdauer länger als 1,1 min. vorzugsweise länger als 3 min. und insbesondere länger als 10 min.

Flächige Abtragsraten von mindestens 0,1 µm, vorzugsweise größer 0,5 µm und insbesondere größer 2 µm.

### Bezugszeichenliste

- 2: Pfostenteil
- 4: Aufbauteil
- 6, 7, 8: Stufe
- 10, 11, 12: Gewinde
- 14: apikales Ende
- 15: koronales Ende
- 16: Innenbohrung
- 18: Innengewinde
- 20: Durchgangsbohrung
- 22: Krone

## Patentansprüche

1. Knochenimplantat, umfassend einen auf Basis von Yttrium- und/oder Aluminiumoxid-stabilisiertem Zirkonoxid ausgeführten Keramikkörper, dessen Oberfläche zumindest in einem Teilbereich mit einer nanoskopische Poren aufweisenden oder anderweitig nanoskopisch ausgeführten Struktur versehen ist, und die eine Verarmungszone mit im Vergleich zum Innenvolumen reduziertem Yttrium- bzw. Aluminiumoxid-Anteil aufweist, wobei die Verarmungszone in einem in einen Knochen einbringbaren Teil des Keramikkörpers angeordnet ist.

2. Verfahren zur Herstellung eines zur Einbringung in den menschlichen Körper vorgesehenen Knochenimplantats, bei dem ein auf Basis von Yttriumund/oder Aluminiumoxid-stabilisiertem Zirkonoxid ausgeführter Keramikkörper derart einem Ätz-Prozess ausgesetzt wird, dass an einem in einen Knochen einbringbaren Teil seiner Oberfläche in zumindest in einem Teilbereich stabilisierende Yttrium- bzw. Aluminiumoxid-Bestandteile selektiv derart herausgelöst werden, dass eine Verarmungszone mit im Vergleich zum Innenvolumen reduziertem Anteil am jeweiligen Keramik-Bestandteil entsteht.

## Claims

1. A bone implant, comprising a ceramic body formed on the basis of yttrium-stabilised and/or aluminium-oxide-stabilised zirconium oxide, the surface of said ceramic body being provided, at least in a partial region, with a structure having nanoscopic pores or being otherwise formed nanoscopically, and said surface having a depletion zone having a reduced yttrium or aluminium oxide content in comparison to the inner volume, wherein the depletion zone is arranged in a part of the ceramic body that can be inserted into a bone.

2. A method for producing a bone implant intended for insertion into the human body, in which a ceramic body formed on the basis of yttrium-stabilised and/or aluminium-oxide-stabilised zirconium oxide is subjected to an etching process in such a way that, on a part of the surface of said ceramic body introducible into a bone, at least in a partial region, stabilising yttrium or aluminium oxide constituents are selectively dissolved out in such a way that a depletion zone with a reduced content in comparison to the inner volume is produced on the respective ceramic part.

## Revendications

1. Implant osseux comprenant un corps céramique fabriqué à base de zircone stabilisée à l'oxyde d'yttrium et/ou d'aluminium, dont la surface est dotée, au moins dans une partie, d'une structure présentant des pores nanoscopies ou conçue nanoscopique d'une autre façon, et qui présente une zone d'épuisement avec une teneur en oxyde d'yttrium, respectivement d'aluminium réduite par rapport au volume intérieur, dans lequel la zone d'épuisement est disposée dans une partie du corps céramique pouvant être introduite dans un os.

2. Procédé de fabrication d'un implant osseux prévu pour être déposé dans le corps humain, dans lequel un corps céramique fabriqué à base de zircone stabilisée à l'oxyde d'yttrium et/ou d'aluminium est ainsi soumis à un procédé de gravure chimique que sur une partie de sa surface pouvant être déposée dans un os, dans au moins une zone partielle, des composantes d'oxyde d'yttrium et/ou d'aluminium de stabilisation sont ainsi dissoutes de manière sélective qu'une zone d'épuisement avec une teneur réduite par rapport au volume intérieur est produite sur la partie en céramique respective.
